# EUROPEAN PATENT APPLICATION

(11) **EP 4 679 696 A1**
(43) Date of publication of application: **14.01.2026**
(21) Application number: 25180198.1
(22) Date of filing: 02.06.2025
(51) Int. Cl.: H02M 1/32, H02M 3/335

(54) **LOAD MODULATION CIRCUIT AND POWER ADAPTER CONTROL METHOD**

(30) Priority: 12.07.2024 CN 202410933359
(71) Applicant: Delta Electronics, Inc., Taoyuan 333 (TW)
(72) Inventor: Tseng, Pei-Chih, 333 Taoyuan (TW); Huang, Yu-Lun, 333 Taoyuan (TW)
(74) Representative: Nederlandsch Octrooibureau

(57) **Abstract**

A load modulation circuit applied to a power adapter, comprising a temperature sensing circuit, a rectification sensing circuit and a control circuit. The temperature sensing circuit is configured to obtain a temperature sensing voltage according to an internal temperature of the power adapter. The rectification sensing circuit is coupled to a transformer circuit of the power adapter to obtain a rectification sensing voltage. The control circuit is coupled to the transformer circuit, the temperature sensing circuit and the rectification sensing circuit, and is configured to determine whether the temperature sensing voltage exceeds a preset voltage range. When the temperature sensing voltage exceeds the preset voltage range, the control circuit is configured to generate an adjustment signal according to the rectification sensing voltage to adjust an output signal or an operating power of the power adapter.

## Description

### BACKGROUND

### Technical Field

The present disclosure relates to power conversion and power supply technology, and more particularly to a load modulation circuit, a power adapter and a power adapter control method.

### Description of Related Art

A power adapter is a power conversion device used to convert the voltage of a power supply (e.g., mains electricity, energy storage equipment) into a working voltage suitable for various electronic devices, in order to drive or charge electronic devices. For power adapters, both power supply stability and product durability are important design considerations.

### SUMMARY

One aspect of the present disclosure is a load modulation circuit applied to a power adapter, comprising a temperature sensing circuit, a rectification sensing circuit and a control circuit. The temperature sensing circuit is configured to obtain a temperature sensing voltage according to an internal temperature of the power adapter. The rectification sensing circuit is coupled to a transformer circuit of the power adapter to obtain a rectification sensing voltage. The control circuit is coupled to the transformer circuit, the temperature sensing circuit and the rectification sensing circuit, and is configured to determine whether the temperature sensing voltage exceeds a preset voltage range. When the temperature sensing voltage exceeds the preset voltage range, the control circuit is configured to generate an adjustment signal according to the rectification sensing voltage to adjust an output signal or an operating power of the power adapter.

Another aspect of the present disclosure is a power adapter control method, comprising: obtaining, by a temperature sensing circuit, a temperature sensing voltage according to an internal temperature of a power adapter; obtaining, by a rectification sensing circuit, a rectification sensing voltage from a transformer circuit of the power adapter; determining, by a control circuit, whether the temperature sensing voltage exceeds a preset voltage range; generating an adjustment signal according to the rectification sensing voltage when the temperature sensing voltage exceeds the preset voltage range; and adjusting an output signal or an operating power of the power adapter according to the adjustment signal.

Another aspect of the present disclosure is a power adapter, comprising a transformer circuit, a control circuit, an output signal, a temperature sensing circuit and a rectification sensing circuit. The control circuit is coupled to the transformer circuit, and configured to control an output signal output from the transformer circuit to a load. The temperature sensing circuit is coupled to the control circuit and a temperature sensing element of the power adapter, and is configured to obtain a temperature sensing voltage according to an internal temperature of the power adapter. The control circuit is configured to determine whether the temperature sensing voltage exceeds a preset voltage range. The rectification sensing circuit is coupled to the transformer circuit and the control circuit to provide a rectification sensing voltage to the control circuit. When the temperature sensing voltage exceeds the preset voltage range, the control circuit is configured to generate an adjustment signal according to the rectification sensing voltage, and adjust the output signal according to the adjustment signal.

It is to be understood that both the foregoing general description and the following detailed description are by examples, and are intended to provide further explanation of the disclosure as claimed.

### BRIEF DESCRIPTION OF THE DRAWINGS

The present disclosure can be more fully understood by reading the following detailed description of the embodiment, with reference made to the accompanying drawings as follows:
FIG. 1 is a schematic diagram of a power adapter and a load modulation circuit in some embodiments of the present disclosure.
FIG. 2 is a flowchart illustrating a power adapter control method in some embodiments of the present disclosure.
FIG. 3A is a schematic diagram of the load modulation circuit in some embodiments of the present disclosure.
FIG. 3B is a schematic diagram of the load modulation circuit in some embodiments of the present disclosure.

### DETAILED DESCRIPTION

For the embodiment below is described in detail with the accompanying drawings, embodiments are not provided to limit the scope of the present disclosure. Moreover, the operation of the described structure is not for limiting the order of implementation. Any device with equivalent functions that is produced from a structure formed by a recombination of elements is all covered by the scope of the present disclosure. Drawings are for the purpose of illustration only, and not plotted in accordance with the original size.

It will be understood that when an element is referred to as being "connected to" or "coupled to", it can be directly connected or coupled to the other element or intervening elements may be present. In contrast, when an element to another element is referred to as being "directly connected" or "directly coupled," there are no intervening elements present. As used herein, the term "and/or" includes an associated listed items or any and all combinations of more.

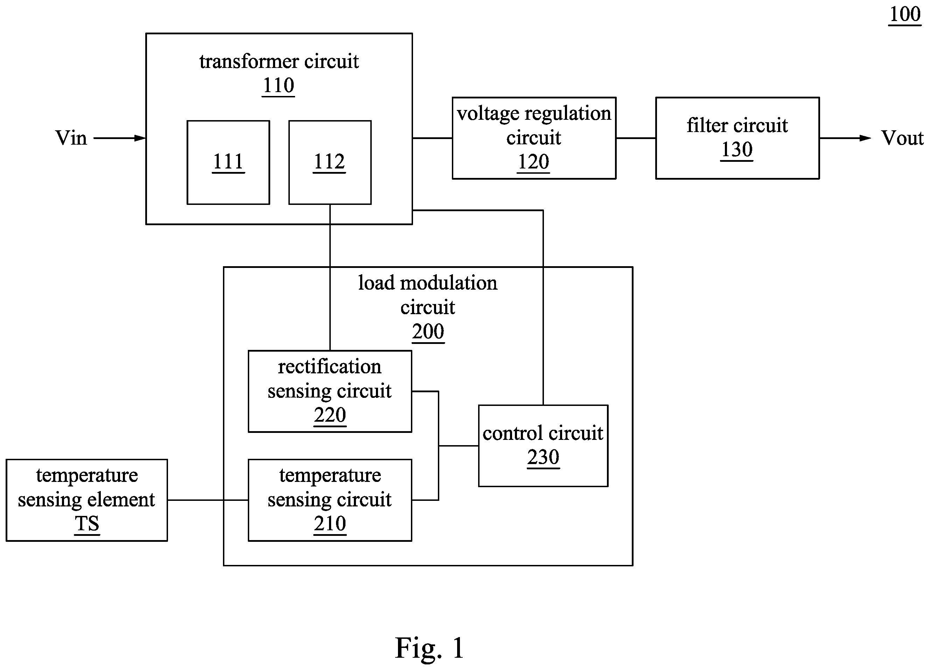

FIG. 1 is a schematic diagram of a power adapter 100 and a load modulation circuit 200 in some embodiments of the present disclosure. The power adapter 100 is configured to receive an input voltage Vin, and convert the voltage level of the input voltage Vin to generate an output voltage Vout. The output voltage Vout is provided to a load (not shown in figure), so as to drive the load or charge the load. The power adapter 100 can obtain the input voltage Vin from a power supply (e.g., mains electricity, energy storage equipment), and the load of the power adapter 100 can be any electronic device that needs to be driven or charged.

The load modulation circuit 200 is arranged in the power adapter 100, and can be used as a part of the power adapter 100. The load modulation circuit 200 is configured to selectively adjust the operating state (e.g., the operating power) of the power adapter 100 to change the output signal of the power adapter 100. Since voltage and current are interrelated electrical characteristics of power signals, the aforementioned "output signal" may be a voltage value (e.g., the output voltage Vout) or a current value output by the power adapter 100.

In one embodiment, the power adapter 100 can convert the input voltage Vin into the output voltage Vout by an isolation transformer circuit. For example, as shown in FIG. 1, the power adapter 100 includes a transformer circuit 110, a voltage regulation circuit 120 and a filter circuit 130. The transformer circuit 110 includes a primary side circuit 111 and a secondary side circuit 112. The voltage regulation circuit 120 (e.g., level shifter) is coupled to the transformer circuit 110 ( or used as a part of the transformer circuit 110), and is configured to adjust the voltage domain to output voltage. The filter circuit 130 is coupled to the voltage regulation circuit 120, and is configured to filter the voltage noise output by the voltage regulation circuit 120 to generate the output voltage Vout. The circuit structure shown in FIG. 1 is only an example, and the power adapter 100 is not limited thereto. Since one of ordinary skill in the art can understand the implementation of transformers and voltage conversion, it will not be described in detail here.

The power adapter 100 further includes a temperature sensing element TS, the temperature sensing element TS is arranged in the power adapter 100, and is coupled to the load modulation circuit 200. The electrical characteristics (e.g., impedance value) of the temperature sensing element TS changes with the ambient temperature, so the temperature sensing element TS can be used to detect the internal temperature of the power adapter 100. The electrical characteristic of the temperature sensing element TS that change with temperature will be called "temperature sensing signal" here. According to the configuration of the temperature sensing element TS, the amount of the temperature sensing signal can be positively correlated or negatively correlated with the internal temperature of the power adapter 100.

Since the power adapter 100 is used to convert electricity, the power adapter 100 will generate heat during operation, and the power adapter 100 need a heat dissipation mechanism, such as a heat sink. If the internal temperature of the power adapter 100 is too high, the operating efficiency of the internal circuit will be affected and may even be damaged. However, due to the requirements on the size and cost of the power adapter 100, the heat dissipation mechanism of the power adapter 100 will be a design challenge. The present disclosure adjusts the operating state (e.g., the operating power) of the power adapter 100 in real time by the load modulation circuit 200 to reduce the heat dissipation requirement of the power adapter 100.

As shown in FIG. 1, the load modulation circuit 200 includes a temperature sensing circuit 210, a rectification sensing circuit 220 and a control circuit 230. The temperature sensing circuit 210 is coupled to the temperature sensing element TS, so as to obtain a temperature sensing voltage according to the internal temperature of the power adapter 100. In one embodiment, the temperature sensing element TS forms a temperature sensing signal (e.g., impedance value) according to temperature. The temperature sensing circuit 210 is configured to convert the temperature sensing signal into a corresponding temperature sensing voltage. For example, the temperature sensing circuit 210 is coupled to the temperature sensing element TS and a reference impedance component. The impedance value of the reference impedance component will not chang with temperature. Therefore, the temperature sensing circuit 210 can detect a voltage across the temperature sensing element TS and/or the reference impedance component, or a divided voltage of the temperature sensing element TS and/or the reference impedance component, and uses the detect value as the temperature sensing voltage. Since one of ordinary skill in the art can understand the configuration of the temperature sensing element, it will not be described in detail here.

The rectification sensing circuit 220 is coupled to the transformer circuit 110, and is configured to obtain a rectification sensing voltage. In one embodiment, the rectification sensing circuit 220 is coupled to the secondary side circuit 112 to obtain a current value flowing through the secondary side circuit 112, and generates/calculates the rectification sensing voltage according to the current value. In other words, the rectification sensing voltage corresponds to the current value of the secondary side circuit 112.

The control circuit 230 is coupled to the transformer circuit 110, the temperature sensing circuit 210 and the rectification sensing circuit 220 to obtain the temperature sensing voltage and the rectification sensing voltage. In addition, the control circuit 230 further controls the output signal (e.g., the output voltage Vout shown in FIG. 1 ) output from the transformer circuit 110 to the load. During the power adapter 100 operating, the control circuit 230 is configured to determine whether the temperature sensing voltage exceeds a preset voltage range (e.g.,10 volts to 20 volts). "Preset voltage range" represents the normal temperature range of the power adapter 100. If the temperature exceeds the preset voltage range, it means that the temperature of the power adapter 100 is too high and the internal components may be at risk of damage.

When the temperature sensing voltage exceeds the preset voltage range, the control circuit 230 generates an adjustment signal according to the rectification sensing voltage. The adjustment signal is configured to adjust the output signal (e.g., the amount of the output voltage Vout or the output current) of the power adapter 100, or adjust the operating power of the power adapter 100 (e.g., reduces the operating frequency of the transformer circuit 110). In other words, the control circuit 230 transmits the adjustment signal to an output terminal of the transformer circuit 110 to change a voltage at the output terminal of the transformer circuit 110. The adjustment method will be described in detail in the following paragraphs.

The present disclosure detects the temperature state, the voltage transformation state and the rectification state of the power adapter 100 by the load modulation circuit 200, so as to adjust the operation of the power adapter 100 in real time and dynamically (e.g., change the operating power or the output voltage). Accordingly, since the power adapter 100 automatically adjusts when the temperature is too high, the use of heat dissipation components can be reduced, thereby improving the overall volume or cost of the power adapter 100.

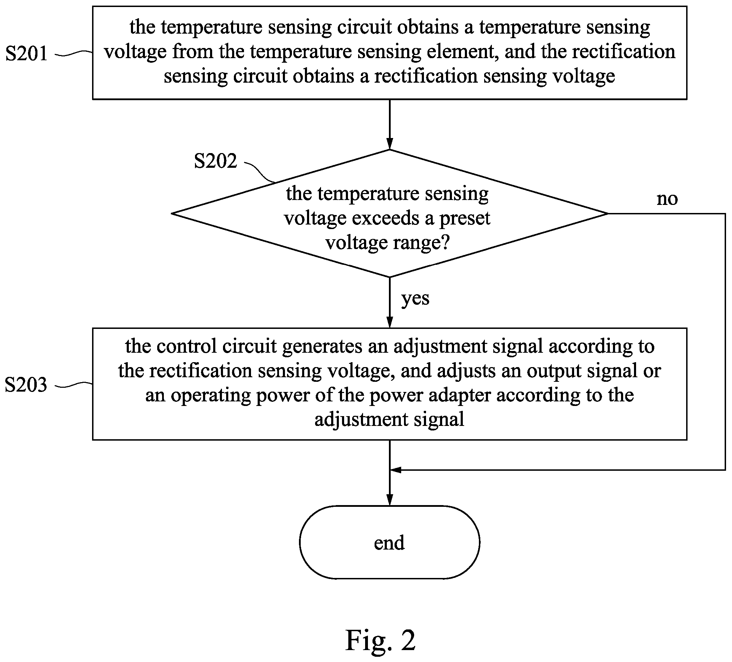

FIG. 2 is a flowchart illustrating a power adapter control method in some embodiments of the present disclosure, which can be applied to the power adapter 100 and the load modulation circuit 200 shown in FIG. 1. In step S201, the power adapter 100 operates and converts the input voltage Vin into the output voltage Vout. At this time, the temperature sensing circuit 210 obtains a temperature sensing voltage from the temperature sensing element TS. As mentioned above, the temperature sensing circuit 210 can detect the impedance or divided voltage of the temperature sensing element TS to generate a temperature sensing voltage, and transmit the temperature sensing voltage to the control circuit 230.

At the same time, the rectification sensing circuit 220 obtains a rectification sensing voltage from the transformer circuit 110, and provides the rectification sensing voltage to the control circuit 230. As mentioned above, the rectification sensing voltage can be generated according to a secondary side circuit of the transformer circuit 110.

In step S202, the control circuit 230 determines whether the temperature sensing voltage exceeds the preset voltage range. For example, the preset voltage range is "10 volts to 20 volts". In the case where the temperature sensing voltage is positively correlated with the internal temperature of the power adapter 100, if the temperature sensing voltage is greater than 20 volts, it means the internal temperature of the power adapter 100 is too high. On the other hand, in the case where the temperature sensing voltage is negatively correlated with the internal temperature of the power adapter 100, if the temperature sensing voltage is lower than 10V, it means the internal temperature of the power adapter 100 is too high.

It is worth mentioning here that, in one embodiment, the rectification sensing circuit 220 periodically obtains the rectification sensing voltage, but the present disclosure is not limited to this. In other embodiments, the rectification sensing circuit 220 can provide the rectification sensing voltage to the control circuit 230 when the control circuit 230 determines that the temperature sensing voltage exceeds the preset voltage range.

If the temperature sensing voltage does not exceed the preset voltage range, the control circuit 230 does not change the power adapter 100. On the other hand, if the temperature sensing voltage is determined to exceed the preset voltage range, in step S203, the control circuit 230 generates the adjustment signal according to the rectification sensing voltage, and changes the output signal or the operating power of the power adapter 100 according to the adjustment signal.

Specifically, the control circuit 230 determines a difference by which the temperature sensing voltage exceeds the preset voltage range, and then generate the adjustment signal according to the difference and the rectification sensing voltage. If the temperature sensing voltage is "25V", which exceeds the preset voltage range (10V-20V), and the difference by which the temperature sensing voltage exceeds the upper limit of the preset voltage range is "5 volts". This difference represents the degree to which the temperature exceeds the normal range, and the rectification sensing voltage represents the current operating state of the transformer circuit 110. Therefore, the control circuit 230 can generate the rectification sensing voltage to generate the adjustment signal according to the difference. For example, the difference of "5 volts" means "the operating power needs to drop by 5%". The control circuit 230 determines the adjustment signal (e.g., a frequency used to control the switches in the transformer circuit 110) required by the transformer circuit 110 to reduce the current operating power by 5%.

In addition, in one embodiment, the control circuit 230 is preset with multiple adjustment parameters. Each adjustment parameter corresponds to a different difference, and is configured to control the circuit or component of the power adapter 100, such as controlling the frequency, the operating power, the current value or the voltage value. After determining the difference between the temperature sensing voltage and the preset voltage range, the control circuit 230 finds a specific adjustment parameter corresponding to the difference. Then, the control circuit 230 calculates the adjustment parameters and the rectification sensing voltage to generate an adjustment signal according to the corresponding adjustment parameter and the rectification sensing voltage. For example, the difference "5V" corresponds to the adjustment parameter "current 1.5mA", which means the output current of the power adapter 100 should be adjusted to 1.5mA. The control circuit 230 can generate the corresponding adjustment signal according to the current rectification sensing voltage, so as to reduce the output current of the power adapter 100 to 1.5 mA.

In one embodiment, the load modulation circuit 200 regularly detects the temperature sensing voltage and/or the rectification sensing voltage, and then determines whether the temperature sensing voltage exceeds the preset voltage range. In other words, at every interval time, the control circuit 230 can control the temperature sensing circuit 210 to obtain the temperature sensing voltage, and control the rectification sensing circuit 220 to obtain the rectification sensing voltage. In other embodiments, the temperature sensing circuit 210 and the rectification sensing circuit 220 regularly obtain the temperature sensing voltage and the rectification sensing voltage, but the control circuit 230 determines at every interval time to reduce computation load.

The interval time mentioned above can be a fixed value, a dynamically changing value, or a combination of both. In one embodiment, once the power adapter 100 is activated, the control circuit 230 can detect the temperature sensing voltage and/or the rectification sensing voltage after a fixed interval time (e.g., half an hour). If the temperature sensing voltage does not exceed the preset voltage range, the control circuit 230 maintain performing detection according to the fixed interval time (e.g., every half an hour) until it determines that the temperature sensing voltage exceeds the preset voltage range.

As mentioned above, in other embodiments, if the temperature sensing voltage exceeds the preset voltage range, the control circuit 230 will sequentially shorten/reduce each subsequent interval time. For example, if a first interval time is half an hour, each subsequent interval time will be 10 minutes less than the previous interval time (or 20% shorter). In other words, the first interval time will be greater than the second interval time, and the second interval time will be greater than the third interval time.

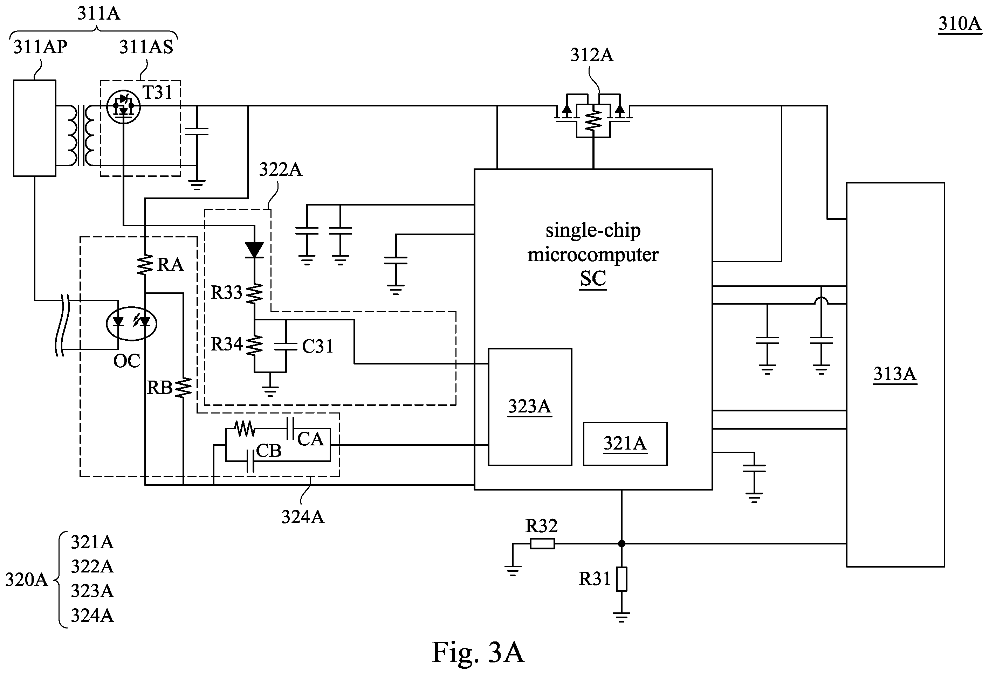

In other embodiments, the control circuit 230 sets the interval time according to the difference by which the temperature sensing voltage exceeds the preset voltage range. For example, after the first interval time, if the temperature sensing voltage does not exceed the preset voltage range, but the difference is less than a preset value (e.g., the difference between the temperature sensing voltage and the lower limit of the preset voltage range is less than 5 volts), the control circuit 230 will shorten the first interval time by a specific ratio (e.g., 20%) to use as the second interval time. On the other hand, if the temperature sensing voltage does not exceed the preset voltage range, and the difference is not less than the preset value (e.g., the difference between the temperature sensing voltage and the lower limit of the preset voltage range is greater than 5 volts), the control circuit 230 uses the original first interval time to set as the second interval time. FIG. 3A is a schematic diagram of the power adapter 310A and the load modulation circuit 320A in some embodiments of the present disclosure. In FIG. 3A, the similar components associated with the embodiment of FIG. 1 are labeled with the same numerals for ease of understanding. The specific principle of the similar component has been explained in detail in the previous paragraphs, and unless it has a cooperative relationship with the components of FIG. 3A, it is not repeated here.

As shown in FIG. 3A, the power adapter 310A includes a transformer circuit 311A, a control switch 312A and an output circuit 313A. The secondary side current and/or the secondary side voltage generated by the transformer circuit 311A is provided to the output circuit 313A through the control switch 312A, then output to the load through the output circuit 313A. Since one of ordinary skill in the art can understand the operation of the power adapter, FIG. 3A only shows a partial circuit of the power adapter 310A, and its operation is not further described here.

The load modulation circuit 320A includes a temperature sensing circuit 321A, a rectification sensing circuit 322A and a control circuit 323A. The temperature sensing circuit 321A is coupled to the temperature sensing element R31, and is configured to obtian the temperature sensing voltage (e.g., obtains a voltage drop according to the impedance vlaue). In some embodiments, the temperature sensing circuit 321A is further coupled to a reference impedance component R32, the impedance of the reference impedance component R32 does not change with temperature. Therefroe, the temperature sensing circuit 321A can calculatethe temperature sensing voltage by comparing a difference between a voltage across the temperature sensing element R31 and a voltage across the reference impedance component R32, or a impedance difference between the temperature sensing element R31 and the reference impedance component R32.

The rectification sensing circuit 322A includes multiple voltage dividing resistors R33, R34 and a filter capacitor C31. The voltage dividing resistors R33, R34 are coupled to a switch T31 of the secondary side circuit of the transformer circuit 311A, so as to a synchronous rectification voltage related to the secondary side current. The rectification sensing circuit 322A divides the synchronous rectification voltage by the voltage dividing resistors R33, R34, and then filters the noise by the filter capacitor C31 to obtain the rectification sensing voltage.

The control circuit 323A is coupled to the temperature sensing circuit 321A and the rectification sensing circuit 322A, and is configured to determine whether the temperature sensing voltage exceeds the preset voltage range. The control circuit 323A is further configured to generate the adjustment signal according to the rectification sensing voltage. The operation of the control circuit 323A can be the same as the embodiment shown in FIG. 1.

In some embodiments, the control circuit 323A transmits the adjustment signal through the voltage-current modulation circuit 324A. The voltage-current modulation circuit 324A is coupled between the control circuit 323A and the transformer circuit 311A (the secondary side circuit 311AS), and includes multiple capacitors CA/CB, multiple resistors RA/RB and an optocoupler OC. The voltage-current modulation circuit 324A is configured to use the capacitors CA, CB to change the divided voltage between the resistors RA, RB according to the adjustment signal, so as to transmit the secondary side voltage or current generated by the secondary side circuit 311AS to the primary side circuit 311AP of the transformer circuit 311A, and adjust the switching frequency and duty cycle in the primary side circuit 311AP, and change the output voltage of the transformer circuit 311A.

The method by which the control circuit 323A uses the adjustment signal to adjust the output signal or the operating power the power adapter 310A is not limited to the embodiment shown in FIG. 3A. In some embodiments, the control circuit 323A can use the adjustment signal to change the switching frequency of the control switch 312A. In other embodiments, the control circuit 323A uses the adjustment signal as a confirmation signal and inputs it into the load of the power adapter 310A to adjust a current value between the power adapter 310A and the load.

For example, when the load is a laptop, the default power requirement may be 60 watts and 5 amps. However, a laptop does not always operates at 60 watts, and may only require 30 watts during normal operation. Therefore, when the load modulation circuit 320A determines that the temperature of the power adapter 310A is too high, the control circuit 323A provides the adjustment signal as a confirmation signal to the laptop, to negotiate reducing the power supply to 30 watts. Accordingly, the output current of the power adapter 310A will be reduced to 2.5A.

In some embodiments, the temperature sensing circuit 321A, the control circuit 323A and the voltage-current modulation circuit 324A can be separate circuits, or can be integrated into the same single-chip microcomputer SC.

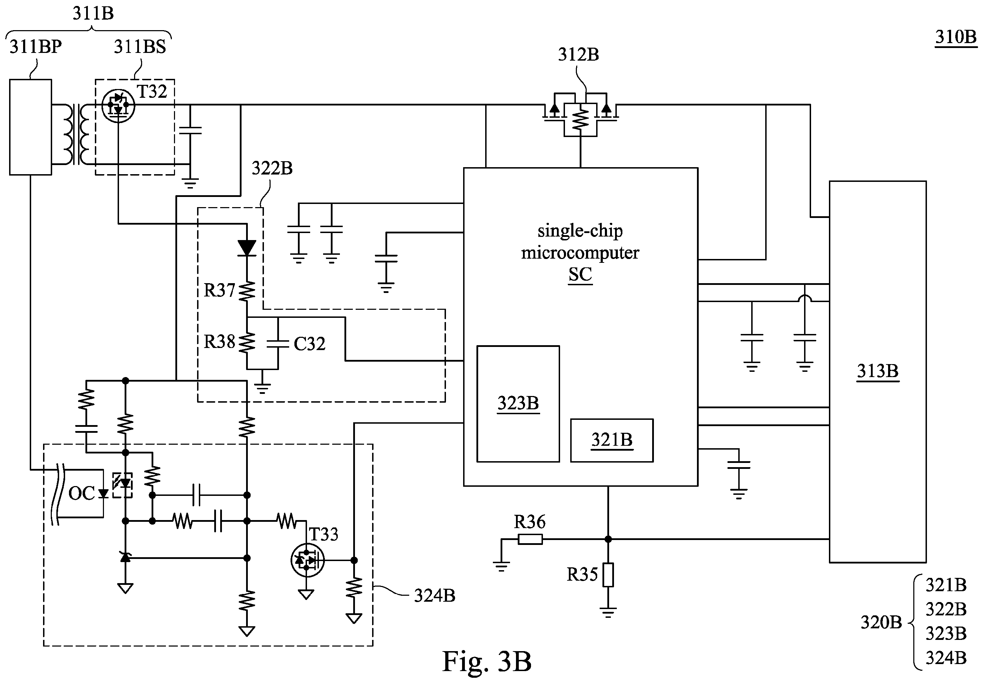

FIG. 3B is a schematic diagram of the power adapter 310B and the load modulation circuit 320B in some embodiments of the present disclosure. In FIG. 3B, the similar components associated with the embodiment of FIG. 1 and FIG. 3A are labeled with the same numerals for ease of understanding. The specific principle of the similar component has been explained in detail in the previous paragraphs, and unless it has a cooperative relationship with the components of FIG. 3B, it is not repeated here.

As shown in FIG. 3B, the power adapter 310B includes a transformer circuit 311B, a control switch 312B and an output circuit 313B. The secondary side current and/or the secondary side voltage generated by the transformer circuit 311B is provided to the output circuit 313B through the control switch 312B, then output to the load through the output circuit 313B. Since one of ordinary skill in the art can understand the operation of the power adapter, FIG. 3B only shows a partial circuit of the power adapter 310B, and its operation is not further described here.

The load modulation circuit 320B includes a temperature sensing circuit 321B, a rectification sensing circuit 322B and a control circuit 323B. The temperature sensing circuit 321B is coupled to the temperature sensing element R35, and is configured to obtian the temperature sensing voltage (e.g., obtains a voltage drop according to the impedance vlaue). As in the above embodiment, the temperature sensing circuit 321B is further coupled to the reference impedance component R36, the impedance of the reference impedance component R36 does not change with temperature. Therefroe, the temperature sensing circuit 321B can calculatethe temperature sensing voltage by comparing a difference between a voltage across the temperature sensing element R35 and a voltage across the reference impedance component R36, or a impedance difference between the temperature sensing element R35 and the reference impedance component R36.

The rectification sensing circuit 322B includes multiple voltage dividing resistors R37, R38 and a filter capacitor C32. The voltage dividing resistor R37, R38 is coupled to a switch T32 of the secondary side circuit of the transformer circuit 311B, so as to a synchronous rectification voltage related to the secondary side current. The rectification sensing circuit 322B divides the synchronous rectification voltage by the voltage dividing resistors R37, R38, and then filters the noise by the filter capacitor C32 to obtain the rectification sensing voltage.

The control circuit 323B is coupled to the temperature sensing circuit 321B and the rectification sensing circuit 322B, and is configured to determine whether the temperature sensing voltage exceeds the preset voltage range. The control circuit 323B is further configured to generate the adjustment signal according to the rectification sensing voltage. The operation of the control circuit 323B can be the same as the embodiments shown in FIG. 1 and FIG. 3A.

In some embodiments, the control circuit 323B transmits the adjustment signal through the voltage-current modulation circuit 324B. The voltage-current modulation circuit 324B is coupled between the control circuit 323B and the transformer circuit 311B (the secondary side circuit 311BS), and includes a transistor switch T33. The voltage-current modulation circuit 324B controls the turn-on or turn-off of the transistor switch T33 according to the adjustment signal, so as to transmit the secondary side current or the secondary side voltage to the primary side circuit 311BP, and adjust the switching frequency and duty cycle in the primary side circuit 311BP, and change the output voltage of the transformer circuit 311B.

Similar to the aforementioned embodiment, the method by which the control circuit 323B uses the adjustment signal to adjust the output signal or the operating power the power adapter 310B is not limited to the embodiment shown in FIG. 3B. The adjustment signal may also be provided to the control switch 312B or the load to change the operating power or the output signal of the power adapter 310B.

The elements, method steps, or technical features in the foregoing embodiments may be combined with each other, and are not limited to the order of the specification description or the order of the drawings in the present disclosure.

## Claims

1. A load modulation circuit (200, 320A, 320B) applied to a power adapter (100, 310A, 310B), **characterized by** comprising:
a temperature sensing circuit (210, 321A, 321B) configured to obtain a temperature sensing voltage according to an internal temperature of the power adapter (100, 310A, 310B);
a rectification sensing circuit (220, 322A, 322B) coupled to a transformer circuit (110, 311A, 311B) of the power adapter (100, 310A, 310B) to obtain a rectification sensing voltage; and
a control circuit (230, 323A, 323B) coupled to the transformer circuit (110, 311A, 311B), the temperature sensing circuit (210, 321A, 321B) and the rectification sensing circuit (220, 322A, 322B), configured to determine whether the temperature sensing voltage exceeds a preset voltage range, wherein when the temperature sensing voltage exceeds the preset voltage range, the control circuit (230, 323A, 323B) is configured to generate an adjustment signal according to the rectification sensing voltage to adjust an output signal or an operating power of the power adapter (100, 310A, 310B).

2. The load modulation circuit of claim 1, **characterized in that** the control circuit (230, 323A, 323B) is configured to determine a difference by which the temperature sensing voltage exceeds the preset voltage range, and generate the adjustment signal according to the difference and the rectification sensing voltage.

3. The load modulation circuit of claim 2, **characterized in that** the control circuit (230, 323A, 323B) is configured to find one of a plurality of adjustment parameters corresponding to the difference, and calculate the one of the plurality of adjustment parameters and the rectification sensing voltage to generate the adjustment signal.

4. The load modulation circuit of claim 1, 2 or 3, **characterized in that** the control circuit (230, 323A, 323B) is configured to transmit a secondary side voltage or a secondary side current of a secondary side circuit (112, 311AS, 311BS) of the transformer circuit (110, 311A, 311B) to a primary side circuit (111, 311AP, 311BP) of the transformer circuit (110, 311A, 311B) according to the adjustment signal, so as to change an output voltage of the transformer circuit (110, 311A, 311B).

5. The load modulation circuit of claim 1, 2 or 3, **characterized in that** the control circuit (230, 323A, 323B) is configured to transmit the adjustment signal to a load of the power adapter (100) to adjust a current value between the power adapter (100) and the load.

6. The load modulation circuit of claim 1, 2, 3, 4 or 5, **characterized in that** the rectification sensing voltage is generated according to a current value of a secondary side circuit of the transformer circuit (110, 311A, 311B).

7. The load modulation circuit of claim 1, 2, 3, 4, 5 or 6, **characterized in that** the temperature sensing circuit (210, 321A, 321B) is coupled to a temperature sensing element in the power adapter (100, 310A, 310B) to obtain a temperature sensing signal, and the temperature sensing circuit (210, 321A, 321B) is configured to convert the temperature sensing signal into the temperature sensing voltage.

8. The load modulation circuit of claim 1, 2, 3, 4, 5, 6 or 7, **characterized in that** the rectification sensing circuit (220, 322A, 322B) comprises a plurality of voltage dividing resistors (R33-R34, R37-R38) and a filter capacitor (C31, C32).

9. A power adapter control method, **characterized by** comprising:
obtaining, by a temperature sensing circuit (210, 321A, 321B), a temperature sensing voltage according to an internal temperature of a power adapter (100, 310A, 310B);
obtaining, by a rectification sensing circuit (220, 322A, 322B), a rectification sensing voltage from a transformer circuit (110, 311A, 311B) of the power adapter (100, 310A, 310B);
determining, by a control circuit (230, 323A, 323B), whether the temperature sensing voltage exceeds a preset voltage range;
generating an adjustment signal according to the rectification sensing voltage when the temperature sensing voltage exceeds the preset voltage range; and
adjusting an output signal or an operating power of the power adapter (100, 310A, 310B) according to the adjustment signal.

10. The power adapter control method of claim 9, **characterized in that** generating the adjustment signal according to the rectification sensing voltage comprises:
determining a difference by which the temperature sensing voltage exceeds the preset voltage range; and
generating the adjustment signal according to the difference and the rectification sensing voltage.

11. The power adapter control method of claim 10, **characterized in that** generating the adjustment signal according to the difference and the rectification sensing voltage comprises:
finding one of a plurality of adjustment parameters corresponding to the difference; and
calculating the one of the plurality of adjustment parameters and the rectification sensing voltage to generate the adjustment signal.

12. The power adapter control method of claim 9, 10 or 11, **characterized in that** adjusting the output signal or the operating power of the power adapter (100, 310A, 310B) according to the adjustment signal comprises: transmitting a secondary side voltage or a secondary side current of a secondary side circuit (112, 311AS, 311BS) of the transformer circuit (110, 311A, 311B) to a primary side circuit (111, 311AP, 311BP) of the transformer circuit (110, 311A, 311B) according to the adjustment signal, so as to change an output voltage of the transformer circuit (110, 311A, 311B).

13. The power adapter control method of claim 9, 10 or 11, **characterized in that** adjusting the output signal or the operating power of the power adapter (100) according to the adjustment signal comprises:
transmitting the adjustment signal to a load of the power adapter (100) to adjust a current value between the power adapter (100) and the load.

14. The power adapter control method of claim 9, 10, 11, 12 or 13, **characterized in that** obtaining the rectification sensing voltage from the transformer circuit (110, 311A, 311B) of the power adapter (100, 310A, 310B) comprises:
generating the rectification sensing voltage according to a current value of a secondary side circuit of the transformer circuit (110, 311A, 311B).
